# EUROPEAN PATENT APPLICATION

(11) **EP 4 021 090 A1**
(43) Date of publication of application: **29.06.2022**
(21) Application number: 20857099.4
(22) Date of filing: 28.06.2020
(51) Int. Cl.: H04W 52/02

(54) **COMMUNICATION METHOD AND RELATED DEVICE**

(30) Priority: 30.08.2019 CN 201910818639
(71) Applicant: Huawei Technologies Co., Ltd., Longgang District Shenzhen, Guangdong 518129 (CN)
(72) Inventor: LIU, Shaofeng, Shenzhen, Guangdong 518129 (CN)
(74) Representative: Gill Jennings & Every LLP
(86) International application number: PCT/CN2020/098518
(87) International publication number: WO 2021/036461

(57) **Abstract**

The present invention discloses a communication method and a related device. The method includes: determining, by a first device, measurement user equipment UE; determining, by the first device, a moving speed of a train based on the measurement UE; and sending, by the first device, first signaling to a second device by using an inter-station interface, where the first signaling is used to indicate the second device to disable an energy-saving state before a first moment or at the first moment, the first moment is obtained based on the moving speed of the train, and the inter-station interface includes an XN interface or an X2 interface. The second device may disable the energy-saving state before the first moment or at the first moment, so that when the train arrives at the second device, the second device can meet requirements of a mobile user on the train. Before receiving the first signaling, the second device runs in the energy-saving state, thereby saving resources.

## Description

This application claims priority to Chinese Patent Application No. 201910818639.3, filed with the China National Intellectual Property Administration on August 30, 2019 and entitled "COMMUNICATION METHOD AND RELATED DEVICE", which is incorporated herein by reference in its entirety.

### TECHNICAL FIELD

The present invention relates to the communications field, and in particular, to a communication method and a related device.

### BACKGROUND

A high-speed railway communication network (high-speed railway dedicated network) is a dedicated network that is set up by using a base station device and that covers a high-speed railway. The high-speed railway communication network serves as an independently operating communications network that is different from a public network. A transmitting/receiving mode and a working principle of a base station in the high-speed railway dedicated network are the same as those in the public network. The high-speed railway dedicated network covers only the high-speed railway and areas along the railway, to provide services for users on a high-speed train and users in the areas along the railway.

Due to particularity of high-speed railway transportation, a high-speed railway dedicated network needs to be deployed to ensure safe operation of a high-speed railway and meet requirements of passengers for high-speed data communication and entertainment. A mobile communications network mainly covers mobile communications devices of passengers on a train, followed by mobile devices of users in coverage areas along the railway.

When there is no train passing through the coverage areas along the railway, a quantity of users is small, and resources of base stations are idle most of the time. If a base station always runs in an energy-saving state, when a train arrives at the base station, requirements of a mobile user on the train cannot be met. If the base station always disables the energy-saving state, resources may be wasted.

### SUMMARY

Embodiments of the present invention provide a communication method and a related device, so that when a train arrives at a base station, requirements of a terminal on the train can be met, and resources can be saved.

A first aspect of the present invention provides a communication method. The method includes: A first device determines measurement user equipment UE; the first device determines a moving speed of a train based on the measurement UE; and the first device sends first signaling to a second device by using an inter-station interface, where the first signaling is used to indicate the second device to disable an energy-saving state before a first moment or at the first moment, the first moment is obtained based on the moving speed of the train, and the inter-station interface includes an XN interface or an X2 interface. The second device may disable the energy-saving state before the first moment or at the first moment, so that when the train arrives at the second device, the second device can meet requirements of a mobile user on the train. Before receiving the first signaling, the second device runs in the energy-saving state, thereby saving resources.

Optionally, with reference to the first aspect, in a first possible implementation of the first aspect, the first signaling includes the moving speed of the train, and before that the first device determines a moving speed of a train based on the measurement UE, the method further includes: The first device receives, from a third device by using the inter-station interface, signaling that includes a second moment, where the second moment is a moment at which the train arrives at the third device, and the signaling that includes the second moment includes HANDOVER REQUEST signaling; and the first device determines a third moment, where the third moment is a moment at which the train arrives at the first device. That the first device determines a moving speed of a train based on the measurement UE includes: The first device determines the moving speed of the train based on the second moment, the third moment, and a distance between the first device and the third device.

Optionally, with reference to the first aspect or the first possible implementation of the first aspect, in a second possible implementation of the first aspect, the first signaling further includes information about user equipment in the train, where the information about the user equipment in the train is used by the second device to determine radio resource load that needs to be carried. The second device may determine the radio resource load that needs to be carried, and then determine, based on the radio resource load that needs to be carried, a quantity of carriers that need to be enabled. In this way, resources can be saved as much as possible when requirements of user equipment on the train are met.

Optionally, with reference to the second possible implementation of the first aspect, in a third possible implementation of the first aspect, that the first device determines a third moment includes: The first device determines that a moment at which a frequency offset of the measurement UE is 0 is a third moment. The moment at which the frequency offset is 0 is a moment at which the train is directly below a base station transmit tower.

Optionally, with reference to the third possible implementation of the first aspect, in a fourth possible implementation of the first aspect, before that the first device determines a moving speed of a train based on the measurement UE, the method further includes: The first device receives a request message for topology connection setup from the third device by using the inter-station interface, where the request message for topology connection setup includes XN SETUP REQUEST signaling, the request message for topology connection setup includes position information of the third device or the distance between the first device and the third device, and the position information of the third device is used by the first device to determine the distance between the first device and the third device; the first device sends a response message for topology connection setup to the third device by using the inter-station interface, where the response message for topology connection setup includes XN SETUP RESPONSE signaling; and the first device sets up a topology connection to the third device.

A second aspect of the present invention provides a communication method. The method includes: A second device receives first signaling from a first device by using an inter-station interface, where the inter-station interface includes an XN interface or an X2 interface; the second device determines a first moment based on the first signaling; and the second device disables an energy-saving state before the first moment or at the first moment. The second device may disable the energy-saving state before the first moment or at the first moment, so that when a train arrives at the second device, the second device can meet requirements of a mobile user on the train. Before receiving the first signaling, the second device runs in the energy-saving state, thereby saving resources.

Optionally, with reference to the second aspect, in a first possible implementation of the second aspect, the first signaling further includes information about user equipment in the train, and before that the second device disables an energy-saving state before the first moment or at the first moment, the method further includes: The second device determines, based on the information about the user equipment, radio resource load that needs to be carried. The second device may determine the radio resource load that needs to be carried, and then determine, based on the radio resource load that needs to be carried, a quantity of carriers that need to be enabled. In this way, resources can be saved as much as possible when requirements of user equipment on the train are met.

Optionally, with reference to the second aspect or the first possible implementation of the second aspect, in a second possible implementation of the second aspect, after that the second device determines a first moment based on the first signaling, the method further includes: The second device sends second signaling to a fourth device by using the inter-station interface, where the second signaling is used to indicate the fourth device to disable the energy-saving state before a fourth moment or at the fourth moment. In this way, base station devices along a railway of the train can disable the energy-saving state before or when the train arrives, and provide services for user equipment on the train.

Optionally, with reference to the second possible implementation of the second aspect, in a third possible implementation of the second aspect, before that the second device sends second signaling to a fourth device, the method further includes: The second device determines the fourth moment based on a moving speed of the train and a distance between the first device and the fourth device, where the second signaling includes the fourth moment.

Optionally, with reference to the third possible implementation of the second aspect, in a fourth possible implementation of the second aspect, before that a second device receives first signaling from a first device by using an inter-station interface, the method further includes: The second device receives a request message for topology connection setup from the first device by using the inter-station interface, where the request message for topology connection setup includes XN SETUP REQUEST signaling; the second device sends a response message for topology connection setup to the first device by using the inter-station interface, where the response message for topology connection setup includes XN SETUP RESPONSE signaling; and the second device sets up a topology connection to the first device.

A third aspect of the present invention provides a communications apparatus. The apparatus includes: a processing unit, configured to determine measurement user equipment UE, where the processing unit is further configured to determine a moving speed of a train based on the measurement UE; and a sending unit, configured to send first signaling to a second device by using an inter-station interface, where the first signaling is used to indicate the second device to disable an energy-saving state before a first moment or at the first moment, the first moment is obtained based on the moving speed of the train, and the inter-station interface includes an XN interface or an X2 interface.

Optionally, with reference to the third aspect, in a first possible implementation of the third aspect, the communications apparatus further includes: a receiving unit, configured to receive, from a third device by using the inter-station interface, signaling that includes a second moment, where the second moment is a moment at which the train arrives at the third device, and the signaling that includes the second moment includes HANDOVER REQUEST signaling; the processing unit is further configured to determine a third moment, where the third moment is a moment at which the train arrives at the first device; and the processing unit is further configured to determine the moving speed of the train based on the second moment, the third moment, and a distance between the first device and the third device.

Optionally, with reference to the third aspect or the first possible implementation of the third aspect, in a second possible implementation of the third aspect, the processing unit is further configured to determine that a moment at which a frequency offset of the measurement UE is 0 is a third moment.

Optionally, with reference to the second possible implementation of the third aspect, in a third possible implementation of the third aspect, the sending unit is further configured to send a request message for topology connection setup to the second device by using the inter-station interface, where the request message for topology connection setup includes XN SETUP REQUEST signaling; the receiving unit is further configured to receive a response message for topology connection setup from the second device by using the inter-station interface, where the response message for topology connection setup includes XN SETUP RESPONSE signaling; and the processing unit is further configured to set up a topology connection to the second device.

A fourth aspect of the present invention provides a communications apparatus. The communications apparatus includes: a receiving unit, configured to receive first signaling from a first device by using an inter-station interface, where the inter-station interface includes an XN interface or an X2 interface; and a processing unit, configured to determine a first moment based on the first signaling, where the processing unit is further configured to disable an energy-saving state before the first moment or at the first moment.

Optionally, with reference to the fourth aspect, in a first possible implementation of the fourth aspect, the processing unit is further configured to determine, based on information about user equipment, radio resource load that needs to be carried.

Optionally, with reference to the fourth aspect or the first possible implementation of the fourth aspect, in a second possible implementation of the fourth aspect, the communications apparatus further includes: a sending unit, configured to send second signaling to a fourth device by using the inter-station interface, where the second signaling is used to indicate the fourth device to disable the energy-saving state before a fourth moment or at the fourth moment.

Optionally, with reference to the second possible implementation of the fourth aspect, in a third possible implementation of the fourth aspect, the processing unit is further configured to determine the fourth moment based on a moving speed of a train and a distance between the first device and the fourth device, where the second signaling includes the fourth moment.

Optionally, with reference to the third possible implementation of the fourth aspect, in a fourth possible implementation of the fourth aspect, the receiving unit is further configured to receive a request message for topology connection setup from the first device by using the inter-station interface, where the request message for topology connection setup includes XN SETUP REQUEST signaling; the sending unit is further configured to send a response message for topology connection setup to the first device by using the inter-station interface, where the response message for topology connection setup includes XN SETUP RESPONSE signaling; and the processing unit is further configured to set up a topology connection to the first device.

A fifth aspect of the present invention provides a communications apparatus. The communications apparatus includes a processor, a memory, and a transceiver. The memory is configured to store a computer program, and the processor is configured to execute computer instructions stored in the memory, so that the communications apparatus performs the method in any one of the first aspect or the possible implementations of the first aspect.

A sixth aspect of the present invention provides a communications apparatus. The communications apparatus includes a processor, a memory, and a transceiver. The memory is configured to store a computer program, and the processor is configured to execute computer instructions stored in the memory, so that the communications apparatus performs the method in any one of the second aspect or the possible implementations of the second aspect.

A seventh aspect of the present invention provides a computer-readable storage medium, configured to store computer program instructions, where the computer program instructions include program instructions used to perform the method in any one of the first aspect or the possible implementations of the first aspect.

An eighth aspect of the present invention provides a computer-readable storage medium, configured to store computer program instructions, where the computer program instructions include program instructions used to perform the method in any one of the second aspect or the possible implementations of the second aspect.

The embodiments of the present invention provide the communication method and the related device. The method includes: The first device determines the measurement user equipment UE; the first device determines the moving speed of the train based on the measurement UE; and the first device sends the first signaling to the second device by using the inter-station interface, where the first signaling is used to indicate the second device to disable the energy-saving state before the first moment or at the first moment, the first moment is obtained based on the moving speed of the train, and the inter-station interface includes the XN interface or the X2 interface. The second device may disable the energy-saving state before the first moment or at the first moment, so that when the train arrives at the second device, the second device can meet requirements of a mobile user on the train. Before receiving the first signaling, the second device runs in the energy-saving state, thereby saving resources.

### BRIEF DESCRIPTION OF DRAWINGS

FIG. 1 is a schematic diagram of an embodiment of a communication method according to the present invention;
FIG. 2 is a schematic diagram of another embodiment of a communication method according to the present invention;
FIG. 3 is a schematic diagram of a scenario according to the present invention;
FIG. 4 is a schematic diagram of an embodiment of a communications apparatus according to the present invention; and
FIG. 5 is a schematic diagram of another embodiment of a communications apparatus according to the present invention.

### DETAILED DESCRIPTION OF EMBODIMENTS

The following clearly and completely describes the technical solutions in the embodiments of the present invention with reference to the accompanying drawings in the embodiments of the present invention. It is clear that the described embodiments are merely some rather than all of the embodiments of the present invention. All other embodiments obtained by a person skilled in the art based on the embodiments of the present invention without creative efforts shall fall within the protection scope of the present invention.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In the specification, claims, and accompanying drawings of this application, terms such as "first" and "second" are intended to distinguish between similar objects, but do not necessarily indicate a specific order or sequence. It should be understood that the data termed in such a way are interchangeable in proper circumstances, so that the embodiments described herein can be implemented in other orders than the order illustrated or described herein. In addition, terms "include" and "have" and any variations thereof are intended to cover the non-exclusive inclusion, for example, a process, method, system, product, or device including a series of steps or modules is not necessarily limited to those clearly listed steps or modules, but may include other steps or modules that are not clearly listed or are inherent to such a process, method, product, or device.

Due to particularity of high-speed railway transportation, a high-speed railway dedicated network needs to be deployed to ensure safe operation of a high-speed railway and meet requirements of passengers for high-speed data communication and entertainment. A mobile communications network mainly covers mobile communications devices of passengers on a train, followed by mobile devices of users in coverage areas along the railway.

When there is no train passing through the coverage areas along the railway, a quantity of users is small, and resources of base stations are idle most of the time. If a base station always runs in an energy-saving mode, when a train passes by, requirements of a mobile user on the train cannot be met. If the base station always runs at full power, resources may be wasted when the train is out of coverage of the base station.

When the train runs, a train dispatching system information database may be connected by invoking preset train trip information or a preset open interface, to obtain a position of the train, enable a base station at the position of the train, and disable a base station in an area which the train has left, thereby saving resources. However, in this method, the train dispatching system information database needs to be accessed, leading to an increase in security costs and maintenance costs.

Alternatively, a relay base station may be disposed on a train to notify a base station along a railway of a moving speed of the train and a resource use status of the train. However, in this manner, a time at which the train arrives at the base station and calculation of radio resource load depend on the relay base station. Networking of the relay base station is relatively complex, and network construction and maintenance costs are relatively high.

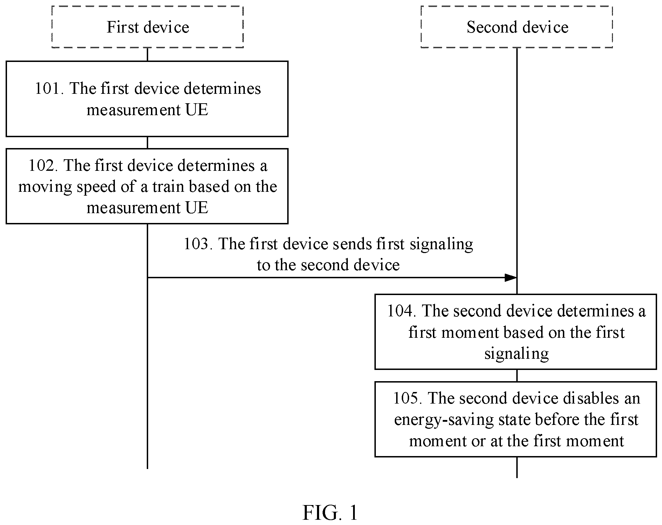

Therefore, Embodiment 1 of the present invention provides a communication method. The method may be applied to a 5G scenario, and may also be applied to a 4G field. Signaling is transmitted between 5G base stations by using an XN interface, and signaling is transmitted between a 5G base station and a 4G base station or between 4G base stations by using an X2 interface. As shown in FIG. 1, the method includes the following steps.

101. A first device determines measurement UE.

The first device may be a base station. The first device may select at least one user equipment (user equipment, UE) in a train, and the measurement UE is any UE in the at least one UE.

102. The first device determines a moving speed of the train based on the measurement UE.

The first device may determine the moving speed of the train based on the measurement UE. Because the measurement UE is located inside the train, the moving speed of the measurement UE is consistent with that of the train. Therefore, a speed based on the measurement UE may be considered as the moving speed of the train. A manner in which the first device determines a moving speed of the train based on the measurement UE may be as follows: The first device may determine the moving speed of the train based on a distance between the first device and a base station preceding the first device, and a difference between a time at which the train arrives at the base station preceding the first device and a time at which the train arrives at the first device. If the distance is D, the time difference is T, and the moving speed of the train is V, the first device may determine the moving speed of the train, that is, V=D/T.

103. The first device sends first signaling to a second device.

The first device sends the first signaling to the second device, where the first signaling may include the moving speed of the train determined by the first device in step 102.

It should be noted that before the first device sends the first signaling to the second device, a topology connection needs to be set up between the first device and the second device. The first device may add, to the first signaling, a distance between the first device and the second device and/or information about user equipment in the train. Both the first device and the second device may be base stations. Position information of the base stations does not change after the base stations are set up. Therefore, the distance between the first device and the second device is definite. The distance between the first device and the second device specifically refers to a track length the train travels between the first device and the second device. The distance between the first device and the second device may be prestored in the first device. The information about the user equipment may include but is not limited to a quantity of UEs in the train, an average quantity of radio resources occupied by UE, an average quantity of antennas for UE, and an average maximum bandwidth capability of UE.

The second device may determine, based on the information about the user equipment, radio resource load that needs to be carried. For example, the second device may determine, based on the information about the user equipment, a quantity of carriers that need to be enabled.

104. The second device determines a first moment based on the first signaling.

The second device determines the first moment based on the first signaling. The first signaling may include the speed of the train.

In an implementation, the first moment may be calculated by the first device and carried in the first signaling. The first device may determine the first moment based on the distance between the first device and the second device and the speed of the train, and the distance between the first device and the second device may be preconfigured on the first device. In this case, the first signaling may not include the moving speed of the train.

In another implementation, the first moment may be calculated by the second device. The first signaling may include the moving speed of the train and the distance between the first device and the second device. The distance between the first device and the second device may alternatively be preconfigured on the second device. After receiving the first signaling, the second device determines the first moment based on the distance between the first device and the second device and the speed of the train.

105. The second device disables an energy-saving state before the first moment or at the first moment.

The second device may disable the energy-saving state before the first moment or at the first moment, and determine, based on the radio resource load that needs to be carried and that is determined in step 103, the quantity of carriers that need to be enabled. When determining that the train has completely passed by, the second device may re-enable the energy-saving state. For example, the second device may determine, on the basis that no high-speed UE accesses the second device, that the train has completely passed by. Alternatively, it is determined, by determining that a quantity of UEs accessing the second device decreases by a predetermined percentage, that the train has completely passed by. For example, when the quantity of UEs accessing the second device decreases by 80% at a specific moment, the second device may determine that the train has completely passed by, and may re-enable the energy-saving state.

Embodiment 1 of the present invention provides the communication method. The method includes: The first device determines the measurement user equipment UE; the first device determines the moving speed of the train based on the measurement UE; and the first device sends the first signaling to the second device, where the first signaling includes the moving speed of the train, and the first signaling is used to indicate the second device to disable the energy-saving state before the first moment or at the first moment. The second device may disable the energy-saving state before the first moment or at the first moment, so that when the train arrives at the second device, the second device can meet requirements of a mobile user on the train. Before receiving the first signaling, the second device runs in the energy-saving state, thereby saving resources.

In a train traveling process, after the train arrives at the second device, the train continues to travel forward. After determining the first moment, the second device may determine a time at which the train arrives at a next base station at a current speed of the train, to notify the next base station to disable the energy-saving state before or when the train arrives. In this way, all base stations along tracks of a railway of the train can disable the energy-saving state before or when the train arrives, and provide services for user equipment on the train.

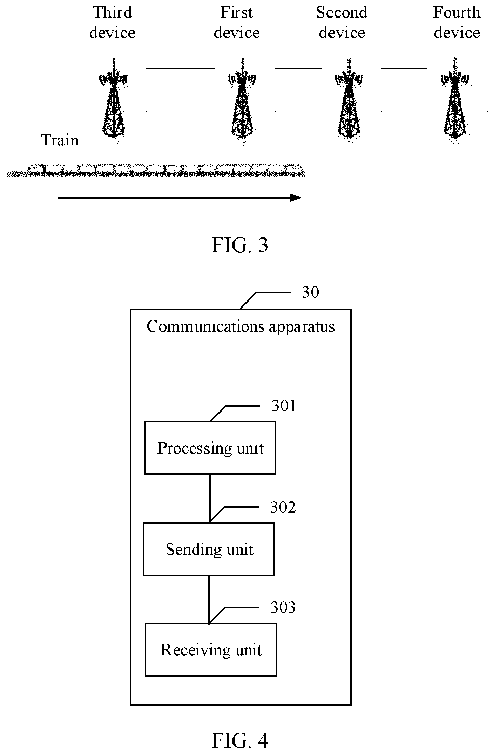

Therefore, Embodiment 2 of this application provides a communication method, as shown in FIG. 3. In the method, a third device, the first device, the second device, and a fourth device are all base stations along the train, and an arrangement sequence of the third device, the first device, the second device, and the fourth device is shown in FIG. 3 based on a traveling direction of the train. The base stations may be connected to each other by using a configured XN interface. After the base stations are powered on, if all the foregoing base stations are 5G base stations, topology connections (the topology connections are bidirectional) may be set up by using XN SETUP REQUEST signaling and XN SETUP RESPONSE signaling. An extended siteposition information element may carry a geographical position of a local base station, and the geographical position may be represented by using latitude and longitude coordinates. The topology relationship may alternatively be set up based on newly added signaling extended from an XN application process (XN application process, XNAP) protocol in the XN interface: XN SHAKEHAND REQUEST and XN SHAKEHAND REQUEST RESPONSE. This is not limited herein. If there is a 4G base station in the foregoing base stations, signaling may be transmitted by using X2 SETUP REQUEST signaling and X2 SETUP RESPONSE signaling.

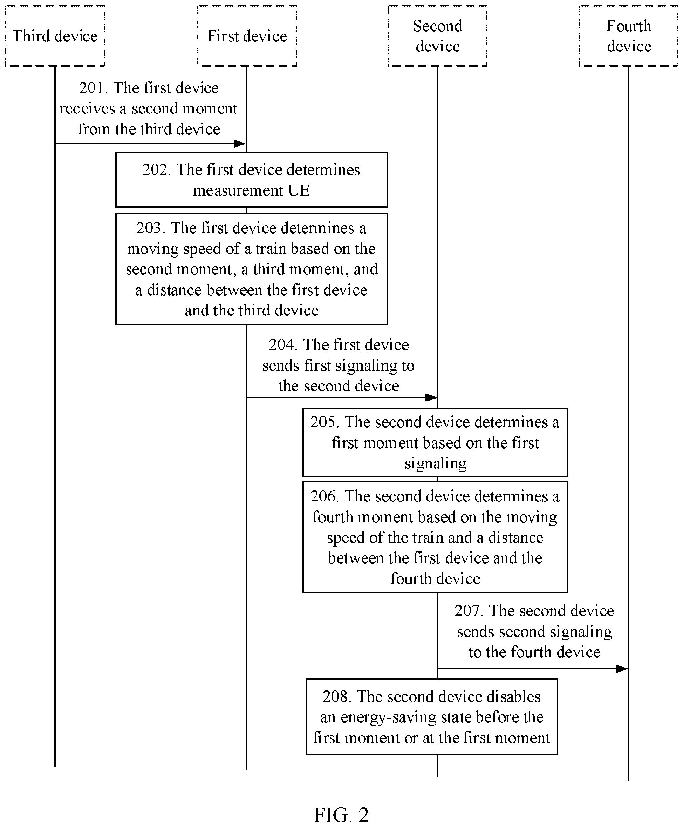

As shown in FIG. 2, Embodiment 2 provides a communication method. As shown in FIG. 2, the method includes the following steps.

201. A first device receives a second moment from a third device.

The third device may first identify accessed high-speed UE. In a manner in which the third device identifies the high-speed UE, continuous detection of a frequency offset may be performed on UE in a connected state. For example, the third device may continuously detect a frequency offset of UE. If frequency offsets detected three consecutive times are greater than or equal to a preset frequency offset threshold, or change amounts of frequency offsets detected three consecutive times are all greater than or equal to a preset frequency offset change amount, the third device may determine that the UE is high-speed UE.

The third device then groups the foregoing high-speed UE. A basis for the grouping may be as follows: The third device may select target UE. For example, the target UE may be the first UE on a train that enters a coverage area of the third device. The third device may group together UEs that have a connection relationship with the third device in a period from a time at which the target UE enters the coverage area to a time at which the target UE leaves the coverage area. The third device may select at least one UE in a same group as measurement UE. The third device may further collect statistics about information about UE in each group, where the information about the UE in the group includes but is not limited to a quantity of UEs and a quantity of radio resources occupied by the group of UEs, for example, information such as a quantity of RBs. It should be noted that grouping of UE by the third device is not limited to grouping of high-speed UE, and may alternatively be grouping of non-high-speed UE. The third device may send information about the selected at least one measurement UE and the information about the UE in each group to the first device.

Target measurement UE in the at least one measurement UE is used as an example. The target measurement UE is any one of the at least one measurement UE. The third device determines that a moment at which a frequency offset of the target measurement UE is 0 is the second moment, where the second moment may be denoted as T_{A}, and the second moment is an absolute time (including a year, a month, a day, an hour, a minute, and a second). Because when an included angle between moving UE in a moving direction and a base station is 90 degrees, and the frequency offset is 0, a moment at which the frequency offset is 0 may be considered as a moment at which the UE is directly below a base station transmit tower. The train is directly below a transmit tower of the third device at the second moment. Herein, an example is used in which it is determined, by measuring whether the frequency offset is 0, whether the train is directly below the transmit tower of the third device. This is not limited thereto.

The third device sends the second moment T_{A} to the first device. For example, the second moment T_{A} may be sent to the first device by using HANDOVER REQUEST signaling of an XN interface. After receiving the HANDOVER REQUEST signaling, the first device returns HANDOVER REQUEST ACKNOWLEDGEMENT signaling to the third device. The third device may alternatively send the second moment T_{A} to the first device by using a signaling message: MEASURE UE NOTIFY, that is newly extended from an XNAP protocol in an XN interface. After receiving the MEASURE UE NOTIFY signaling, the first device returns MEASURE UE ACKNOWLEDGEMENT signaling to the third device. This is not limited herein.

202. The first device determines measurement UE.

The third device may receive information about the measurement UE from the third device, to determine at least one measurement UE from the train. The target measurement UE described in step 201 is used as an example. The first device determines that the moment at which the frequency offset of the target measurement UE is 0 is the third moment, where the third moment may be denoted as T_{B}, and the third moment is also an absolute time described in step 201. The third moment is a moment at which the train is directly below the first device. This is not limited to determining, only by detecting that the frequency offset is 0, that the train is directly below the first device.

203. The first device determines a moving speed of the train based on the second moment, the third moment, and a distance between the first device and the third device.

The first device determines the moving speed of the train based on the second moment T_{A}, the third moment T_{B}, and the distance between the first device and the third device. The distance between the first device and the third device may be denoted as D_{AB}. The distance between the first device and the third device may be sent by the third device to the first device, or may be locally prestored by the first device. The first device may calculate the moving speed of the train according to a formula V=D_{AB}/(T_{B}-T_{A}).

If a plurality of measurement UEs exist, the first device may calculate a speed of each measurement UE in the plurality of measurement UEs, and then obtain an average value as the moving speed of the train.

204. The first device sends first signaling to a second device.

For understanding, refer to step 103 in Embodiment 1.

The first signaling may be UE GROUP NOTIFY signaling extended from the XNAP protocol. After receiving the first signaling, the second device may send a UE GROUP ACKNOWLEDGEMENT message to reply to the first device.

205. The second device determines a first moment based on the first signaling.

For understanding, refer to step 104 in Embodiment 1.

206. The second device determines a fourth moment based on the moving speed of the train and a distance between the first device and a fourth device.

The second device may determine the fourth moment based on the moving speed of the train determined in step 203 and the distance between the first device and the fourth device, where the fourth moment is a moment at which the train arrives at the fourth device. As shown in FIG. 3, it should be noted that the second device may determine a distance between the first device and the second device based on position information of the first device and position information of the second device, and determine a distance between the second device and the fourth device based on the position information of the second device and position information of the fourth device. The distance between the first device and the fourth device may be a distance between the first device and the second device plus the distance between the second device and the fourth device.

In another implementation, the fourth moment may alternatively be calculated by the fourth device. After receiving the speed of the train from the second device, the fourth device may determine the fourth moment based on the distance between the first device and the fourth device. A manner in which the fourth device obtains the distance between the first device and the fourth device is described above.

207. The second device sends second signaling to the fourth device.

The second device sends the second signaling to the fourth device, where the second signaling may include the moving speed of the train, the distance between the second device and the fourth device, UE quantity information in a UE group, and the like. The second device may send the second signaling to the fourth device at the fourth moment, or may add the fourth moment to the second signaling. The second signaling further includes information about user equipment in a train, and the information about the user equipment may include but is not limited to a quantity of UEs in the train, an average quantity of radio resources occupied by UE, an average quantity of antennas for UE, and an average maximum bandwidth capability of UE. The second signaling may further include a distance between a base station at which the speed of the train is calculated and the base station that receives the second signaling. The second device may determine, based on the information about the user equipment, radio resource load that needs to be carried. Refer to FIG. 3. For example, the speed of the train is calculated in the first device, and the second signaling sent by the second device to the fourth device may include the distance between the first device and the fourth device. This can help the fourth device calculate a time at which the train arrives at the fourth device.

The second device may name the second signaling UE GROUP NOTIFY in an XNAP protocol added to the XN interface. After receiving the second signaling, the fourth device may send a UE GROUP ACKNOWLEDGEMENT message to reply to the second device.

It should be noted that there may be another base station following the fourth device along a railway. After receiving the second signaling, the fourth device continues to send signaling downstream, where the signaling is used to indicate a downstream base station to disable the energy-saving state before or when the train arrives and determine, based on radio resource load that needs to be carried, a quantity of carriers that need to be enabled.

It may be understood that, along the railway, each base station has a capability of calculating the speed of the train, and each base station can calculate the speed of the train. The speed of the train may vary, and information about user equipment in the train may also vary. If a base station receives a plurality of instructions that include the speed of the train and information about user equipment, the base station may overwrite an old result with a latest result. Similarly, because the speed of the train may vary, the base station may not continue to propagate signaling downward when a transmission speed of the base station to the downstream base station exceeds a preset restriction condition. For example, after the speed is calculated once, propagation is no longer performed after propagation is performed on 50 base stations, or propagation is no longer performed after a track distance from the base station at which the speed is calculated divided by the speed of the train exceeds 20 minutes. Herein, only two examples are used, which should not be understood as a limitation on the present invention.

208. The second device disables the energy-saving state before the first moment or at the first moment.

For understanding, refer to step 105 in Embodiment 1. Details are not described herein again.

Embodiment 2 of the present invention provides the communication method. In the method, after determining the first moment, the second device may determine a time at which the train arrives at a next base station at a current speed of the train, to notify the next base station to disable the energy-saving state before or when the train arrives. In this way, all base stations along tracks of a railway of the train can disable the energy-saving state before or when the train arrives, and provide services for user equipment on the train.

Embodiment 3 of the present invention provides a communications apparatus 30. The communications apparatus 30 may be the first device in Embodiment 1 or Embodiment 2. Referring to FIG. 4, the communications apparatus 30 may include a processing unit 301, a sending unit 302, and a receiving unit 303.

The processing unit 301 is configured to determine measurement user equipment UE. For understanding, refer to step 101 in Embodiment 1 and step 202 in Embodiment 2. Details are not described herein again.

The processing unit 301 is further configured to determine a moving speed of a train based on the measurement UE. For understanding, refer to step 102 in Embodiment 1 and step 203 in Embodiment 2. Details are not described herein again.

The processing unit 301 is further configured to determine a third moment, where the third moment is a moment at which the train arrives at the first device. For understanding, refer to step 202 in Embodiment 2. Details are not described herein again.

The processing unit 301 is further configured to determine the moving speed of the train based on a second moment, the third moment, and a distance between the first device and a third device. For understanding, refer to step 203 in Embodiment 2. Details are not described herein again.

The processing unit 301 is further configured to determine that a moment at which a frequency offset of the measurement UE is 0 is the third moment. For understanding, refer to step 202 in Embodiment 2. Details are not described herein again.

The processing unit 301 is further configured to set up a topology connection to a second device.

The sending unit 302 is configured to send first signaling to the second device, where the first signaling includes the moving speed of the train, and the first signaling is used to indicate the second device to disable an energy-saving state before a first moment or at the first moment. For understanding, refer to step 103 in Embodiment 1 and step 204 in Embodiment 2. Details are not described herein again.

The sending unit 302 is further configured to send a request message for topology connection setup to the second device by using an inter-station interface, where the request message for topology connection setup includes XN SETUP REQUEST signaling or XN SHAKEHAND REQUEST signaling.

The receiving unit 303 is configured to receive the second moment, where the second moment is a moment at which the train arrives at the third device. For understanding, refer to step 201 in Embodiment 2. Details are not described herein again.

The receiving unit 303 is further configured to receive a response message for topology connection setup from the second device by using an inter-station interface, where the response message for topology connection setup includes XN SETUP RESPONSE signaling or XN SHAKEHAND REQUEST RESPONSE signaling.

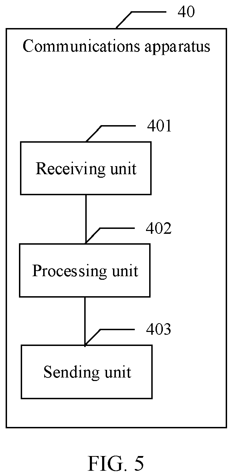

Embodiment 4 of the present invention provides a communications apparatus 40. The communications apparatus 40 may be the second device in an embodiment or Embodiment 2. Referring to FIG. 5, the communications apparatus 40 may include a receiving unit 401, a processing unit 402, and a sending unit 403.

The receiving unit 401 is configured to receive first signaling from a first device, where the first signaling includes a moving speed of a train. For understanding, refer to step 103 in Embodiment 1 and step 204 in Embodiment 2. Details are not described herein again.

The receiving unit 401 is further configured to receive a request message for topology connection setup from the first device by using an inter-station interface, where the request message for topology connection setup includes XN SETUP REQUEST signaling or XN SHAKEHAND REQUEST signaling.

The processing unit 402 is configured to determine a first moment based on the first signaling. For understanding, refer to step 104 in Embodiment 1 and step 205 in Embodiment 2. Details are not described herein again.

The processing unit 402 is further configured to disable an energy-saving state before the first moment or at the first moment. For understanding, refer to step 105 in Embodiment 1 and step 208 in Embodiment 2. Details are not described herein again.

The processing unit 402 is further configured to determine, based on information about user equipment, radio resource load that needs to be carried. For understanding, refer to step 207 in Embodiment 2. Details are not described herein again.

The processing unit 402 is further configured to determine a fourth moment based on the moving speed of the train and a distance between the second device and a fourth device, where second signaling includes the fourth moment. For understanding, refer to step 206 in Embodiment 2. Details are not described herein again.

The processing unit 402 is further configured to set up a topology connection to the first device.

The sending unit 403 is configured to send the second signaling to the fourth device, where the second signaling includes the moving speed of the train, and the second signaling is used to indicate the fourth device to disable the energy-saving state before the fourth moment or at the fourth moment. For understanding, refer to step 207 in Embodiment 2. Details are not described herein again.

The sending unit 403 is further configured to send a response message for topology connection setup to the first device by using the inter-station interface, where the response message for topology connection setup includes XN SETUP RESPONSE signaling or XN SHAKEHAND REQUEST RESPONSE signaling.

The communication method and the related device provided in the embodiments of the present invention are described in detail above. Specific examples are used in this application to describe principles and implementations of the present invention. The foregoing description about the embodiments is merely for understanding the methods and core ideas of the present invention. In addition, a person of ordinary skill in the art may make modifications to the specific implementations and application scopes according to the idea of the present invention. In conclusion, the content of this specification should not be construed as a limitation on the present invention. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the spirit and scope of the technical solutions of the embodiments of this application.

## Claims

1. A communication method, wherein the method comprises:
determining, by a first device, measurement user equipment UE;
determining, by the first device, a moving speed of a train based on the measurement UE; and
sending, by the first device, first signaling to a second device by using an inter-station interface, wherein the first signaling is used to indicate the second device to disable an energy-saving state before a first moment or at the first moment, the first moment is obtained based on the moving speed of the train, and the inter-station interface comprises an XN interface or an X2 interface.

2. The communication method according to claim 1, wherein the first signaling comprises the moving speed of the train, and before the determining, by the first device, a moving speed of a train based on the measurement UE, the method further comprises:
receiving, by the first device from a third device by using the inter-station interface, signaling that comprises a second moment, wherein the second moment is a moment at which the train arrives at the third device, and the signaling that comprises the second moment comprises HANDOVER REQUEST signaling;
determining, by the first device, a third moment, wherein the third moment is a moment at which the train arrives at the first device; and
the determining, by the first device, a moving speed of a train based on the measurement UE comprises:
determining, by the first device, the moving speed of the train based on the second moment, the third moment, and a distance between the first device and the third device.

3. The communication method according to claim 1 or 2, wherein the first signaling further comprises:
information about user equipment in the train, wherein the information about the user equipment in the train is used by the second device to determine radio resource load that needs to be carried.

4. The communication method according to claim 3, wherein the determining, by the first device, a third moment comprises:
determining, by the first device, that a moment at which a frequency offset of the measurement UE is 0 is the third moment.

5. The communication method according to claim 4, wherein before the determining, by the first device, a moving speed of a train based on the measurement UE, the method further comprises:
receiving, by the first device, a request message for topology connection setup from the third device by using the inter-station interface, wherein the request message for topology connection setup comprises XN SETUP REQUEST signaling, the request message for topology connection setup comprises position information of the third device or the distance between the first device and the third device, and the position information of the third device is used by the first device to determine the distance between the first device and the third device;
sending, by the first device, a response message for topology connection setup to the third device by using the inter-station interface, wherein the response message for topology connection setup comprises XN SETUP RESPONSE signaling; and
setting up, by the first device, a topology connection to the third device.

6. A communication method, wherein the method comprises:
receiving, by a second device, first signaling from a first device by using an inter-station interface, wherein the inter-station interface comprises an XN interface or an X2 interface;
determining, by the second device, a first moment based on the first signaling; and
disabling, by the second device, an energy-saving state before the first moment or at the first moment.

7. The communication method according to claim 6, wherein the first signaling further comprises information about user equipment in a train, and before the disabling, by the second device, an energy-saving state before the first moment or at the first moment, the method further comprises:
determining, by the second device based on the information about the user equipment, radio resource load that needs to be carried.

8. The communication method according to claim 6 or 7, wherein after the determining, by the second device, a first moment based on the first signaling, the method further comprises:
sending, by the second device, second signaling to a fourth device by using the inter-station interface, wherein the second signaling is used to indicate the fourth device to disable the energy-saving state before a fourth moment or at the fourth moment.

9. The communication method according to claim 8, wherein before the sending, by the second device, second signaling to a fourth device, the method further comprises:
determining, by the second device, the fourth moment based on a moving speed of the train and a distance between the first device and the fourth device, wherein the second signaling comprises the fourth moment.

10. The communication method according to claim 9, wherein before the receiving, by a second device, first signaling from a first device by using an inter-station interface, the method further comprises:
receiving, by the second device, a request message for topology connection setup from the first device by using the inter-station interface, wherein the request message for topology connection setup comprises XN SETUP REQUEST signaling;
sending, by the second device, a response message for topology connection setup to the first device by using the inter-station interface, wherein the response message for topology connection setup comprises XN SETUP RESPONSE signaling; and
setting up, by the second device, a topology connection to the first device.

11. A communications apparatus, wherein the communications apparatus comprises:
a processing unit, configured to determine measurement user equipment UE, wherein
the processing unit is further configured to determine a moving speed of a train based on the measurement UE; and
a sending unit, configured to send first signaling to a second device by using an inter-station interface, wherein the first signaling is used to indicate the second device to disable an energy-saving state before a first moment or at the first moment, the first moment is obtained based on the moving speed of the train, and the inter-station interface comprises an XN interface or an X2 interface.

12. The communications apparatus according to claim 11, wherein the communications apparatus further comprises:
a receiving unit, configured to receive, from a third device by using the inter-station interface, signaling that comprises a second moment, wherein the second moment is a moment at which the train arrives at the third device, and the signaling that comprises the second moment comprises HANDOVER REQUEST signaling;
the processing unit is further configured to determine a third moment, wherein the third moment is a moment at which the train arrives at the first device; and
the processing unit is further configured to determine the moving speed of the train based on the second moment, the third moment, and a distance between the first device and the third device.

13. The communications apparatus according to claim 11 or 12, wherein
the processing unit is further configured to determine that a moment at which a frequency offset of the measurement UE is 0 is the third moment.

14. The communications apparatus according to claim 13, wherein
the sending unit is further configured to send a request message for topology connection setup to the second device by using the inter-station interface, wherein the request message for topology connection setup comprises XN SETUP REQUEST signaling;
the receiving unit is further configured to receive a response message for topology connection setup from the second device by using the inter-station interface, wherein the response message for topology connection setup comprises XN SETUP RESPONSE signaling; and
the processing unit is further configured to set up a topology connection to the second device.

15. A communications apparatus, wherein the communications apparatus comprises:
a receiving unit, configured to receive first signaling from a first device by using an inter-station interface, wherein the inter-station interface comprises an XN interface or an X2 interface; and
a processing unit, configured to determine a first moment based on the first signaling, wherein
the processing unit is further configured to disable an energy-saving state before the first moment or at the first moment.

16. The communications apparatus according to claim 15, wherein
the processing unit is further configured to determine, based on information about user equipment, radio resource load that needs to be carried.

17. The communications apparatus according to claim 15 or 16, wherein the communications apparatus further comprises:
a sending unit, configured to send second signaling to a fourth device by using the inter-station interface, wherein the second signaling is used to indicate the fourth device to disable the energy-saving state before a fourth moment or at the fourth moment.

18. The communications apparatus according to claim 17, wherein
the processing unit is further configured to determine the fourth moment based on a moving speed of a train and a distance between the first device and the fourth device, wherein the second signaling comprises the fourth moment.

19. The communications apparatus according to claim 18, wherein
the receiving unit is further configured to receive a request message for topology connection setup from the first device by using the inter-station interface, wherein the request message for topology connection setup comprises XN SETUP REQUEST signaling;
the sending unit is further configured to send a response message for topology connection setup to the first device by using the inter-station interface, wherein the response message for topology connection setup comprises XN SETUP RESPONSE signaling; and
the processing unit is further configured to set up a topology connection to the first device.

20. A communications apparatus, comprising:
a processor, a memory, and a transceiver, wherein the memory is configured to store a computer program, and the processor is configured to execute computer instructions stored in the memory, to enable the communications apparatus to perform the method according to any one of claims 1 to 5.

21. A communications apparatus, comprising:
a processor, a memory, and a transceiver, wherein the memory is configured to store a computer program, and the processor is configured to execute computer instructions stored in the memory, to enable the communications apparatus to perform the method according to any one of claims 6 to 10.

22. A computer-readable storage medium, configured to store computer program instructions, wherein the computer program instructions comprise program instructions used to perform the method according to any one of claims 1 to 5.

23. A computer-readable storage medium, configured to store computer program instructions, wherein the computer program instructions comprise program instructions used to perform the method according to any one of claims 6 to 10.

24. A computer program product, wherein the computer program product comprises computer program code; and when the computer program code is run on a computer, the computer is enabled to perform the communication method according to any one of claims 1 to 5.

25. A computer program product, wherein the computer program product comprises computer program code; and when the computer program code is run on a computer, the computer is enabled to perform the communication method according to any one of claims 6 to 10.

26. A communication system, wherein the communication system comprises the communications apparatus according to any one of claims 11 to 14 and the communications apparatus according to any one of claims 15 to 19.

27. An apparatus, wherein the apparatus is configured to perform the method according to any one of claims 1 to 5.

28. An apparatus, wherein the apparatus is configured to perform the method according to any one of claims 6 to 10.

29. A chip, wherein the chip comprises a processor, and the processor is configured to execute computer program code stored in a memory to perform the communication method according to any one of claims 1 to 5.

30. A chip, wherein the chip comprises a processor, and the processor is configured to execute computer program code stored in a memory to perform the communication method according to any one of claims 6 to 10.
